# EUROPÄISCHE PATENTSCHRIFT

(11) **EP 0 911 715 B1**
(45) Veröffentlichungstag und Bekanntmachung des Hinweises auf die Patenterteilung: **26.02.2003**
(21) Anmeldenummer: 98117885.8
(22) Anmeldetag: 21.09.1998
(51) Int. Cl.: G05D 7/01, F24D 19/10

(54) **Durchfluss-Regelventil mit integriertem Druckregler**
Flow control valve with integrated pressure controller
Vanne de réglage de débit à régulateur de pression intégré

(30) Priorität: 20.10.1997 EP 97118122
(43) Veröffentlichungstag der Anmeldung: 28.04.1999
(73) Patentinhaber: Siemens Building Technologies AG, 6300 Zug (CH)
(72) Erfinder: Wild, Willi, 6319 Allenwinden (CH); Merz, Siegfried, 8911 Rifferswil (CH)
(74) Vertreter: Berg, Peter, Dipl.-Ing.

(56) Entgegenhaltungen:
- EP-A- 0 264 466
- EP-A- 0 347 675
- EP-A- 0 751 448
- WO-A-96/09485
- GB-A- 2 039 344
- US-A- 3 344 805
- US-A- 5 178 324

## Beschreibung

Die Erfindung betrifft ein Durchfluss-Regelventil mit integriertem Druckregler der im Oberbegriff des Anspruchs 1 genannten Art.

Solche Durchfluss-Regelventile eignen sich gemäss der Lehre des europäischen Patents EP 677 708 beispielsweise zur Verwendung als Heizkörperventile in einer Warmwasserheizung, bei der mehrere Heizkörper in wenigstens einem Strang hydraulisch zusammengeschlossen sind. Mit solchen Durchfluss-Regelventilen können die einzelnen Heizkörper unabhängig vom jeweils vorherrschenden, durch den Betrieb der anderen Heizkörper beeinflussten Druckabfall mit gleichbleibender Heizleistung betrieben werden. Dies wird in bekannter Weise durch einen Regelkörper erreicht, der den Durchfluss eines Strömungsmediums regelt und einen Druckregulierkörper, der den Druckabfall am Regelkörper reguliert.

Ein Durchfluss-Regelventil der im Oberbegriff des Anspruchs 1 genannten Art ist aus der europäischen Patentanmeldung EP 751 448 bekannt. Dieses Ventil ist jedoch relativ gross und weist als Besonderheit eine speziell gestaltete Durchflussbegrenzung auf, durch die der volle Verstellbereich erhalten bleibt. Der Regelkörper und der Druckregulierkörper sind in dieser Schrift wie auch in der WO 96/09485 und der US 5,178,324 getrennt ohne direkte Verbindung angeordnet, was zu einer relativ grossen Bauweise bezüglich der Bauhöhe führt.

Ein weiteres Durchfluss-Regelventil ist aus der US 3 344 805 bekannt. Das für Industrieanlagen konzipierte Durchfluss-Regelventil weist den Nachteil auf, dass die Drücke, die am Druckregulierkörper angreifen, unsymmetrisch sind, da das durch das Ventil strömende Strömungsmedium ungleichmässig, d.h. einseitig abgeführt wird und darüber hinaus bei zunehmender Öffnung des Druckregulierkörpers der Druckabfall am Regelkörper durch variierende, d.h. sich ändernde Flächen, über die die entsprechenden vorherrschenden Drücke Kräfte auf den Regelkörper und den Druckregulierkörper ausüben, nicht mehr ausreichend regulierbar ist. Ausserdem zieht die zwischen dem Antriebsstab des Regelkörpers und dem Druckregulierkörper vorhandene Dichtung in der Form eines O-Ringes relativ grosse Reibungskräfte nach sich, wodurch sich dieses Ventil nicht als Thermostatventil eignet.

Aus der französischen Patentanmeldung FR 2 740 544 ist ein Ventil mit einer einzigen Drosselstelle bekannt, bei dem die Durchflussmenge annähernd unabhängig vom Druckabfall ist. Eine Verstellmöglichkeit zur Verstellung des Nenndurchflusses, d.h. ein Regelkörper ist aber nicht gegeben.

Der Erfindung liegt die Aufgabe zugrunde, ein Durchfluss-Regelventil der genannten Art dahingehend zu verbessern, dass die Abmessungen kompakter sind, dass der Druckregulierkörper des Regelventils zur Reduzierung der Druckhysterese möglichst leichtgängig bewegbar ist und dass sich das Ventil für den Einsatz als Heizkörperventil eignet.

Die Erfindung löst diese Aufgabe durch die Merkmale des Anspruchs 1. Weitere vorteilhafte Ausgestaltungen ergeben sich aus den abhängigen Ansprüchen.

Die Erfindung offenbart ein Durchfluss-Regelventil zur Regelung des Durchflusses eines Strömungsmediums, mit einem Einlassraum, zwei nacheinander angeordneten Drosselstellen und einem Auslassraum, wobei die erste Drosselstelle als Verstellorgan für den Durchfluss dient und wobei die Druckdifferenz über der ersten Drosselstelle mittels der zweiten Drosselstelle auf einen konstanten Wert geregelt wird. Die erste Drosselstelle wird dabei in bekannter Weise von einem Regelkörper gebildet, der mit einem ersten Ventilsitz zur Regelung des Durchflusses zusammenwirkt, während die zweite Drosselstelle von einem Druckregulierkörper gebildet wird, der mit einem zweiten Ventilsitz zur Regelung der Druckdifferenz zusammenwirkt.

Der Einlassraum wird mit einer Druckkammer verbunden, die zumindest teilweise auf den Druckregulierkörper einwirkt, indem das Strömungsmedium frei zwischen dem Einlassraum und der Druckkammer zirkulieren kann, d.h. insbesondere in der Druckkammer derselbe Druck herrscht wie im Einlassraum. Dabei ist eine erste wirksame Fläche, die den im Einlassraum herrschenden Druck auf den Druckregulierkörper überträgt, annähernd gleich einer zweiten wirksamen Fläche, die den zwischen den beiden Drosselstellen herrschenden Druck auf den Druckregulierkörper überträgt, und der Druckregulierkörper ermöglicht durch einen rotationssymmetrischen Aufbau und durch die rotationssymmetrische Gestaltung des Ausslassraumes hinter der zweiten Drosselstelle einen rotationssymmetrischen Durchfluss des Strömungsmediums.

Der Druckregulierkörper und das Ventilgehäuse sind mittels einer elastischen Membrane verbunden, wobei diese bei einer Anordnung des Druckregulierkörpers auf der Antriebsseite des Regelkörpers darüber hinaus auch mit dem Regelkörper verbunden ist. Somit ist dann der Regelkörper und der Druckregulierkörper mittels der elastischen Membran verbunden, die in einer gleichen ersten Richtung verschiebbar sind. Die elastische Membran dient zur beweglichen Lagerung des Druckregulierkörpers und zur Abdichtung der Druckkammer. Zwischen dem Ventilgehäuse und dem durch den Antrieb verstellbaren, ansonsten aber festen Regelkörper kann sich der Druckregulierkörper mittels der Aufhängung durch die Membran frei bewegen. Dabei ist die Membran am Regelkörper bzw. der Antriebsstange oder Spindel zum Antrieb des Regelkörpers derart befestigt, dass sie die Druckkammer gegenüber dem zwischen den Drosselstellen befindlichen Raum abdichtet. Dadurch entfallen etwaige O-Ring-Dichtungen und es wird ein sehr leichtgängiges Verstellen des Regelkörpers sowie eine fast reibungsfreie Bewegung des Druckregulierkörpers relativ zum Regelkörper gewährleistet. Darüber hinaus garantiert die Membran ein von den Bewegungen der einzelnen Körper unabhängiges und zuverlässiges Abdichten zur Verhinderung eines Druckabfalls in den einzelnen Kammern des Ventils. Bei einer Anordnung des Druckregulierkörpers auf der dem Antrieb des Regelkörpers abgewandten Seite, ist der Druckregulierkörper mittels der Membran direkt mit dem Ventilgehäuse verbunden.

Der Druckregulierkörper und der Regelkörper sind mit Vorteil kegelförmig, bzw. zumindest teilweise konisch ausgeformt, um eine für das Strömungsmedium möglichst strömungsgünstige Formgebung zu gewährleisten.

Der Druckregulierkörper, der Regelkörper und die entsprechenden Verbindungen, auch über die Membran, sind derart ausgestaltet, insbesondere die entsprechenden Ventilsitze in Relation zu den Körpern, dass eine dritte wirksame Fläche, die den im Einlassraum herrschenden Druck auf den Regelkörper in der ersten Richtung überträgt, annähernd gleich einer vierten wirksamen Fläche ist, die den im Einlassraum herrschenden Druck auf den Regelkörper in der zur ersten Richtung entgegengesetzten Richtung überträgt. Dabei befindet sich die dritte wirksame Fläche auf der dem Einlassraum zugewandten Seite des Regelkörpers und die vierte wirksame Fläche auf der der Druckkammer zugewandten Seite des Regelkörpers. Die Summe aus der ersten wirksamen Fläche und vierten wirksamen Fläche ist in etwa annähernd so gross wie die Summe aus der zweiten wirksamen Fläche und dritten wirksamen Fläche, wobei sich die wirksamen Flächen aus solchen "Angriffsflächen" ergeben, die eine durch die entsprechenden Drücke verursachte Kraftübertragung bzw. Kraftausübung in der ersten Richtung, in den Figuren als y-Richtung gekennzeichnet, zulassen.

Der Druckregulierkörper ist derart ausgebildet, dass die Kraft, die durch den im Auslassraum herrschenden Druck zumindest teilweise auf den Druckregulierkörper in der ersten Richtung wirkt, der Kraft bzw. den Kräften entspricht, die durch den im Auslassraum herrschenden Druck zumindest teilweise auf den Druckregulierkörper in einer zur ersten Richtung (12) entgegengesetzten Richtung wirken.

Die durch den im Auslassraum herrschenden Druck verursachten Kräfte, bzw. die durch den im Einlassraum und in der Druckkammer herrschenden Druck und den zwischen den Drosselstellen herrschenden Druck und/oder die durch die Strömung des Strömungsmediums zumindest durch die zweite Drosselstelle verursachten Kräfte wirken durch die Formgebung und die o.g. Ausgestaltung des Druckregulierkörpers, der Membran, des Regelkörpers und der Anlenkungen, bzw. Führungen und den Drosselstellen symmetrisch auf die entsprechenden beweglichen Körper innerhalb des Ventils. Durch das symmetrische Angreifen der Kräfte lässt sich das Ventil mit den sich annähernd gleich grossen wirksamen Flächen in kleiner Bauweise für die Anwendung als Heizkörperventil realisieren.

Der Druckregulierkörper bildet in der Umgebung der zweiten Drosselstelle mittels annähernd zur ersten Richtung parallel angeordneter Flügel bzw. Rippen, die zur reibungsarmen Führung des Druckregulierkörpers dienen, gleichzeitig Strömungskammern, die eine Strömung des Strömungsmediums in zur ersten Richtung nicht annähernd parallelen Richtungen verhindert. Darüber hinaus sind Mittel zur Erhöhung der Masse des Druckregulierkörpers vorhanden, die, zusammen mit den Strömungskammern ein Flattern bzw. Resonanzschwingungen des Druckregulierkörpers aufgrund seiner freien Beweglichkeit und des durchströmenden Mediums verhindern.

Die zweite Drosselstelle wird durch eine kegelförmige Fläche, die mit einem scharfkantigen Gegenstück zusammenwirkt, gebildet, damit infolge der sehr geringen Flächen die durch die Strömung gemäss dem Gesetz von Bernoulli bewirkten Kräfte auf den Druckregulierkörper (9) möglichst gering bleiben. Der Regelkörper weist darüber hinaus vorteilhafterweise ein Gummiteil auf, das mit dem ersten Ventilsitz die erste Drosselstelle bildet, wobei das Gummiteil eine Dichtlippe aufweist, die den Durchfluss des Strömungsmediums durch die erste Drosselstelle sektoriell begrenzt.

Mit Vorteil besitzt der Regelkörper eine Kammer, deren Volumen wenigstens halb so gross ist wie die durch eine volle Hubänderung bewirkte Volumenänderung der Druckkammer, um allfällige Hubbewegungen durch den Austausch des Strömungsmediums zu erleichtern, ohne dass Ablagerungen aus dem Kreislauf in die Druckkammer gelangen.

Mit Vorteil ist das Ventilgehäuse samt aller zur Funktion des Durchfluss-Regelventils gehörenden Teile lösbar mit dem den Einlassraum und Ausslassraum bildenden Gehäuse oder Rohr verbunden, so dass das Ventil bsp. erst nach der Installation der Heizungsrohre montiert werden kann.

Nachfolgend werden Ausführungsbeispiele der Erfindung anhand der Zeichnungen näher erläutert. Dabei zeigen:
- Fig. 1: eine Prinzipdarstellung der Erfindung,
- Fig. 2: eine Schnittzeichnung eines Durchfluss-Regelventils mit zwei Drosselstellen,
- Fig. 3: eine besondere Ausgestaltung der ersten Drosselstelle,
- Fig. 4: einen Ausschnitt der ersten Drosselstelle im Querschnitt,
- Fig. 5: eine Bohrung zur Lagerung einer Spindel im Querschnitt,
- Fig. 6: eine Schnittzeichnung des Durchfluss-Regelventils, das sich zum einfachen Einbau in ein Radiatorgestänge eignet, und
- Fig. 7: eine Schnittdarstellung einer anderen Ausgestaltung des Durchfluss-Regelventils mit zwei Drosselstellen.

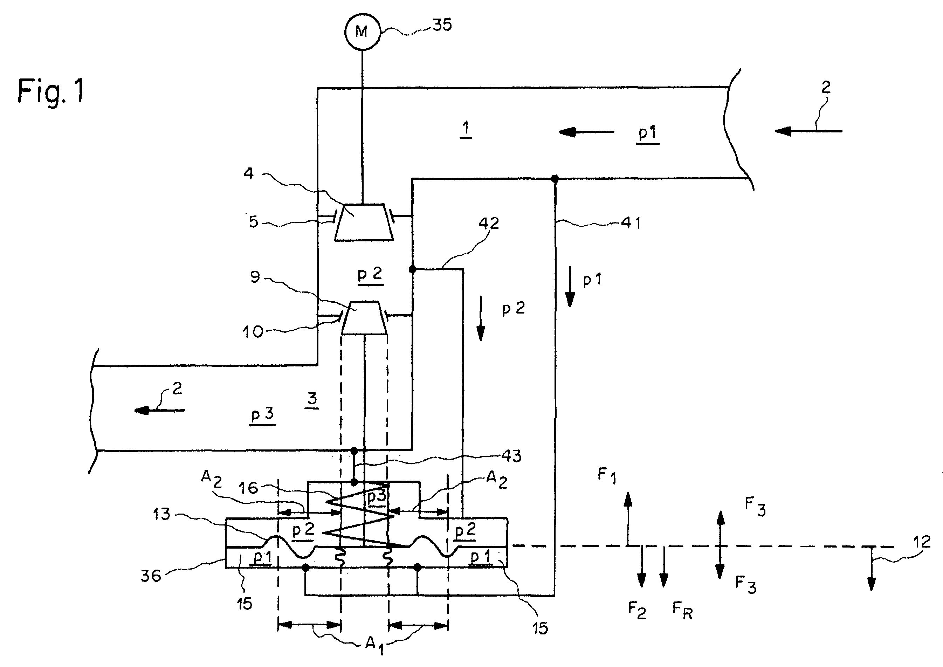

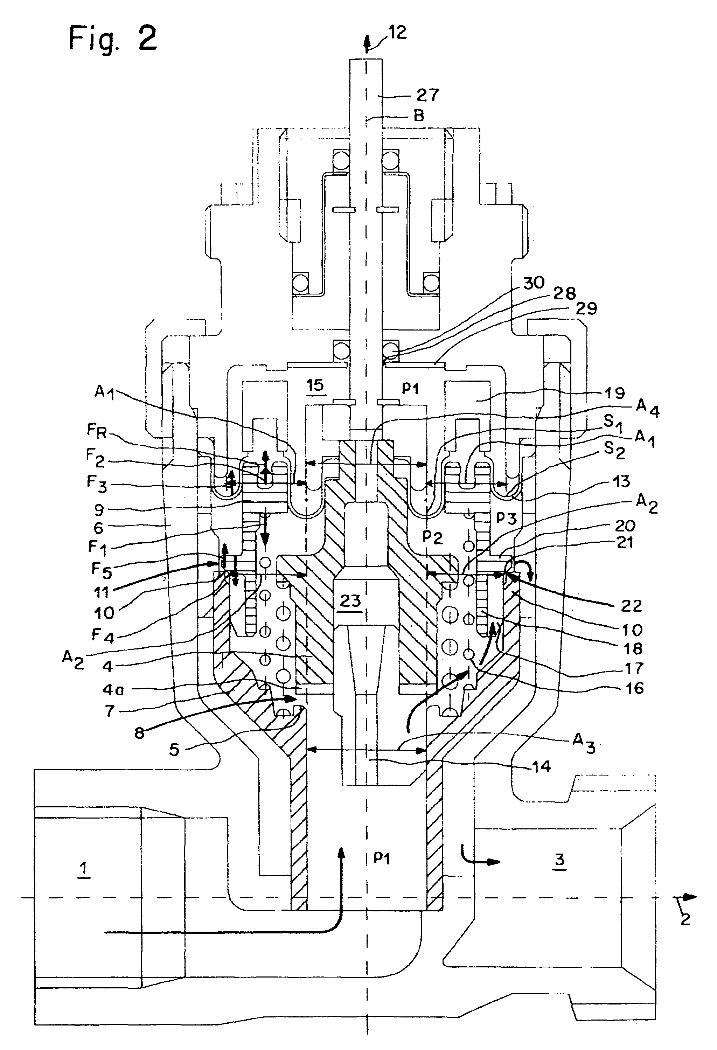

Fig. 1 zeigt das Prinzip der Erfindung und dient zur erleichterten Erläuterung des Ventils nach Fig. 2. Die Bezugszeichen entsprechen sich, wobei in der Fig. 1 zusätzliche Leitungen 41, 42 und 43 eingezeichnet sind, die die entsprechenden Drücke der einzelnen Kammern zu dem im unteren Teil der Fig. 1 dargestellten "Druckregelgefäss" bzw. dem Membranantrieb 36 leiten. Zu beachten sind auch die in Fig. 1 am rechten Rand dargestellten Kräfte in der ersten Richtung 12. Ein Motor 35 treibt dabei den Regelkegel 4 an.

Die Fig. 2 zeigt ein Durchfluss-Regelventil mit dem Prinzip nach Fig.1, durch dessen Einlassraum 1 das in x-Richtung 2 fliessende Strömungsmedium in das Durchfluss-Regelventil eintritt und durch dessen Auslassraum 3 das Strömungsmedium das Durchfluss-Regelventil in gleicher x-Richtung 2 wieder verläßt, wie dies auch durch Pfeile dargestellt ist. Zwischen dem Einlassraum 1 und dem Auslassraum 3 befinden sich zwei in Reihe geschaltete Drosselstellen. Die erste Drosselstelle wird gebildet von einem Regelkörper 4, der mit einem ersten Ventilsitz 5 zusammenwirkt, wobei dieser bsp. ein mit dem Ventilgehäuse 6 fest verbundener Ventileinsatz 7 sein kann, zur Bildung einer ersten verstellbaren Öffnung 8. Der Regelkörper 4 weist ein Dichtungselement 4a auf, damit die Öffnung 8 im geschlossenen Zustand des Durchfluss-Regelventils dicht schliesst. Die zweite Drosselstelle wird gebildet von einem Druckregulierkörper 9, der mit einem zweiten Ventilsitz 10 - bsp. des Ventileinsatzes 7 - zusammenwirkt, zur Bildung einer zweiten verstellbaren Öffnung 11. Der Druck im Einlassraum ist mit p₁, der Druck zwischen den beiden Drosselstellen mit p₂ und der Druck im Auslassraum mit p₃ bezeichnet. Diese Drücke werden durch die in Fig. 1 dargestellten Leitungen 41, 42, 43 zum Membranantrieb 36 geleitet, der wie folgt näher erläutert wird.

Die erste Drosselstelle dient als Verstellorgan für den Durchfluss, während die Funktion der zweiten Drosselstelle darin besteht, die Druckdifferenz p₁-p₂ über der ersten Drosselstelle konstant zu halten, damit der Durchfluss unabhängig von der über dem Durchfluss-Regelventil herrschenden Druckdifferenz p₁-p₃ ist. Das Strömungsmedium durchströmt das Durchfluss-Regelventil in x-Richtung 2. Der Regelkörper 4 und der Druckregulierkörper 9 sind entlang einer senkrecht zur x-Richtung 2 gerichteten y-Richtung 12 verschiebbar. Die y-Lage des Regelkörpers 4 bestimmt den Öffnungsgrad der ersten Öffnung 8 und damit den Durchfluss. Der Regelkörper 4 wird von einem Sollwertsteller, z.B. einem ferngesteuerten elektromotorischen Antrieb 35 oder einem thermostatischen Antrieb betätigt.

Der Druckregulierkörper 9 ist über eine elastische Membrane 13 sowohl mit dem Regelkörper 4 als auch mit dem Ventilgehäuse 6 verbunden. Die Membrane 13 ist Teil eines hydraulischen Antriebes, der die Lage des Druckregulierkörpers 9 bezüglich des zweiten Ventilsitzes 10 und damit den Grad der zweiten Öffnung 11 steuert. Diese Steuerung wird dadurch ermöglicht, dass auf die Membrane 13 einerseits der Eingangsdruck p₁ und andererseits der zwischen den Drosselstellen wirkende Druck p₂ wirken. Um diese Wirkung zu erreichen, ist der Einlassraum 1 über eine im Regelkörper 4 angebrachte Bohrung 14 mit einer Druckkammer 15 verbunden, die auf die Membrane 13 und auf den Druckregulierkörper 9 einwirkt. Der Druck p₁ übt somit eine in negativer y-Richtung 12 wirkende Kraft F₁ auf den Druckregulierkörper 9 aus. Andererseits übt der Druck p₂ eine in positiver y-Richtung 12 wirkende Kraft F₂ auf den Druckregulierkörper 9 aus. Die wirksame Fläche, an der der Druck p₁ an der Membrane 13 oder am Druckregulierkörper 9 angreift ist gleich der wirksamen Fläche bemessen, an der der Druck p₂ an der Membrane 13 oder am Druckregulierkörper 9 angreift. Die resultierende Kraft F₁-F₂ ist daher direkt proportional zum Differenzdruck p₁-p₂. Eine zwischen dem Ventileinsatz 7 und dem Druckregulierkörper 9 eingespannte Reglerfeder 16 übt eine in positiver y-Richtung 12 auf den Druckregulierkörper 9 wirkende Kraft F_{R} aus. Der Öffnungsgrad der Öffnung 11 stellt sich so ein, dass die Kräfte F₁-F₂ und F_{R} gleich gross sind.

Die Reglerfeder 16 könnte auch zwischen dem Druckregulierkörper 9 und dem Regelkörper 4 eingespannt sein, allerdings unter Inkaufnahme einer leichten Verschlechterung der Ventileigenschaften.

Die wirksame Fläche A₁, an der der Druck p₁ an der Membrane 13 oder am Druckregulierkörper 9 angreift, erstreckt sich in radialer Richtung im wesentlichen zwischen den beiden Scheitelpunkten S₁ und S₂ der Membrane 13 rotationssymmetrisch zentriert um die Mittelachse B des Ventilkörpers in der y-Richtung 12. Die wirksame Fläche A₂, an der der Druck p₂ an der Membrane 13 oder am Druckregulierkörper 9 angreift, erstreckt sich in radialer Richtung im wesentlichen vom Scheitelpunkt S₁ der Membrane 13 bis zum zweiten Ventilsitz 10. Der Ventilsitz 10 und der Scheitelpunkt S₂ liegen deshalb annähernd auf einer zur y-Richtung 12 parallelen Achse. Anzumerken ist hier, dass der Abstand der Scheitelpunkte S₁ und S₂ zur y-Achse 12 leicht abhängig ist von der Lage des Regelkörpers 4 und der Lage des Druckregulierkörpers 9.

Darüber hinaus ist der Regelkörper 4 derart ausgestaltet, dass die wirksame Fläche A₄, die im oberen Bereich des Regelkörpers 4 dem Druck p₁ der Druckkammer 15 ausgesetzt ist und sich im wesentlichen radial zwischen der Mittelachse B und dem Scheitelpunkt S₁ erstreckt, in etwa der wirksamen Fläche A₃ entspricht, die sich aus dem Durchmesser der ersten Drosselstelle, bzw. dem Abstand der Mittelachse B zum ersten Ventilsitz 5 ergibt. Somit ist ein Kräftegleichgewicht gewährleistet, das sich sowohl über den Regelkörper 4 erstreckt, so dass die zum Bewegen des Regelkörpers 4 notwendige Kraft minimal wird, als auch über den Druckregulierkörper 9, so dass sich die gewünschte Druckstabilität für den Durchfluss der ersten Drosselstelle unabhängig von Druck p₃ des Ausslassraumes ergibt.

Der rotationssymmetrische Aufbau des gesamten Durchfluss-Regelventils führt dazu, dass das Wasser die zweite Drosselstelle über den gesamten Winkelbereich von 360° durchströmt, so dass in der Folge der für die Regelung nötige Hub des Druckregulierkörpers 9 minimal wird. Eine Änderung der Lage des Druckregulierkörpers 9 infolge einer Änderung der äusseren Druckdifferenz p₁ - p₃ führt somit zu der kleinst möglichen Hubänderung und somit zu der kleinst möglichen Änderung der von der Reglerfeder 16 auf den Druckregulierkörper 9 ausgeübten Kraft F_{R} und somit zur geringst möglichen Änderung des den Durchfluss bestimmenden Wirkdruckes p₁ - p₂.

Die elastische Membrane 13 ermöglicht eine praktisch reibungsfreie Bewegung sowohl des Regelkörpers 4 als auch des Druckregulierkörpers 9 entlang der y-Richtung 12. Die Führung des Druckregulierkörpers 9 in y-Richtung wird durch Flügel bzw. Rippen 17 gewährleistet, die mit dem Ventileinsatz 7 oder dem Ventilkörper 6 selbst zusammenwirken. Der Druckregulierkörper 9 weist bevorzugt einen parallel zur y-Richtung 12 ausgebildeten Zylindermantel 18 auf, der die Flügel 17 verbindet, so dass zwischen den Flügeln 17 kleine Strömungskammern gebildet sind. Jede Bewegung des Druckregulierkörpers 9 in x-Richtung 2 führt nun dazu, dass einige der Strömungskammern kleiner und andere grösser werden. Die dabei nötige Umverteilung des Strömungsmediums ist aber erschwert, da die Strömungskammern das Strömen des Strömungsmediums in x-Richtung 2 stark erschweren. Schwingungen des Druckregulierkörpers 9 werden auf diese Weise stark gedämpft, wenn nicht gar verhindert.

Mittels eines auf den Druckregulierkörper 9 aufgesetzten Ringes 19, beispielsweise aus Messing, Kupfer oder versiegeltem Blei kann die Masse des Druckregulierkörpers 9 erhöht und damit die Resonanzfrequenz der möglichen Schwingungen erniedrigt werden. Dadurch liegt die Resonanzfrequenz tiefer als die durch die Strömung erzeugten Erregerfrequenzen.

Der Druck p₃ greift auch an der Membrane 13 an und übt eine in positiver y-Richtung 12 auf den Druckregulierkörper 9 wirkende Kraft F₃ aus. Zur Kompensation dieser Kraft F₃ weist der Druckregulierkörper 9 einen Fortsatz 20 auf, an dem der Druck p₃ derart angreift, dass auf den Druckregulierkörper 9 auch eine in negativer y-Richtung 12 gerichtete Kraft F₄ wirkt. Zu beachten ist hier, dass der Druck p₃ auch im Bereich des zweiten Ventilsitzes 10 am Fortsatz 20 angreift und eine ebenfalls in positiver y-Richtung 12 auf den Druckregulierkörper 9 wirkende Kraft F₅ ausübt. Die wirksame Fläche dieses Fortsatzes 20 ist gleich der wirksamen Fläche bemessen, an der der Druck p₃ auf die Membrane 13 einwirkt, damit sich die Kräfte F₃, F₄ und F₅ gegenseitig kompensieren. Der Druck p₃ im Auslassraum 3 hat dann keinen Einfluss auf die Lage des Druckregulierkörpers 9.

Der Druckregulierkörper 9 weist im Bereich des zweiten Ventilsitzes 10 eine kegelförmige Fläche 21 auf, die im Querschnitt als schräge Kante erscheint. Der zweite Ventilsitz 10 ist scharfkantig ausgebildet, wobei die Kante 22 die kegelförmige Fläche 21 des Druckregulierkörpers 9 entlang einer kreisrunden Linie dann berührt, wenn die zweite Drosselstelle geschlossen ist. Im unmittelbaren Bereich der Öffnung 11 ist die für den Durchfluss wirksame Querschnittsfläche am geringsten, deshalb ist dort die Strömungsgeschwindigkeit des Strömungsmediums am höchsten. Gemäss dem Gesetz von Bernoulli vermindert sich daher dort der Druck. Dies hat zur Folge, dass in unmittelbarer Nähe der Öffnung 11 nicht der Druck p₂ bzw. p₃, sondern ein gegenüber dem Druck p₂ bzw. p₃ verminderter Druck auf den Druckregulierkörper 9 einwirkt. Dies hat eine Verkleinerung der auf den Druckregulierkörper 9 insgesamt einwirkenden Kraft F₂ zur Folge. Die Verkleinerung der Kraft F₂ kann teilweise über eine entsprechende Vergrösserung der Fläche, an der der Druck p₂ am Druckregulierkörper 9 angreift, kompensiert werden.

Da die Verkleinerung der Kraft F₂ innerhalb des Arbeitsbereiches des Durchlass-Regelventils nun aber nicht konstant ist, sondern vom Öffnungsgrad der Öffnung 11 abhängt, bleibt eine leichte Abhängigkeit des Durchflusses von der über dem Durchlass-Regelventil herrschenden Druckdifferenz p₁-p₃ übrig. Wäre jedoch der Ventilsitz 10 nicht wie beschrieben scharfkantig ausgebildet, sondern mit einer zur kegelförmigen Fläche 21 parallel ausgebildeten Fläche versehen, dann wäre der Bereich, wo nicht mehr der Druck p₂ sondern ein kleinerer Druck am Druckregulierkörper 9 angreift, noch grösser. Damit wäre auch die Abhängigkeit des Durchflusses von der über dem Durchlass-Regelventil herrschenden Druckdifferenz p₁-p₃ ausgeprägter.

Die infolge der Strömung verursachte Verminderung des auf den Fortsatz 20 wirkenden Druckes p₃ äussert sich in einer Verkleinerung der Kraft F₅. Die Verkleinerung der Kraft F₅ ist abhängig von der Strömungsgeschwindigkeit und somit vom Durchfluss. Um diesen Effekt so gering wie möglich zu halten, erstreckt sich der Fortsatz 20 in radialer Richtung möglichst wenig über den durch die innere Kante definierten Ventilsitz 10 hinaus, d.h. nur soviel, wie infolge unvermeidbarer Toleranzen nötig ist.

Innerhalb des Regelkörpers 4 ist eine Kammer 23 vorgesehen, deren Volumen im Idealfall mindestens so gross, vorteilhaft wenigstens halb so gross, wie die durch eine volle Hubänderung bewirkte Volumenänderung der Druckkammer 15. Bei einer Hubbewegung des Regelkörpers 4 oder des Druckregulierkörpers 9 ändert sich das Volumen der Druckkammer 15, infolgedessen ein Austausch an Strömungsmedium zwischen der Druckkammer 15 und dem Einlassraum 1 stattfinden müsste. Die Kammer 23 kann dieses mehr oder weniger an Strömungsmedium ganz oder wenigstens teilweise aufnehmen, sodass nur bei grossen Hubänderungen des Regelkörpers 4 ein Austausch zwischen der Druckkammer 15 und dem Einlassraum 1 stattfindet. Die Gefahr einer Verschmutzung der Druckkammer 15 oder der Bohrung zwischen der Kammer 23 und der Druckkammer 15 ist damit reduziert.

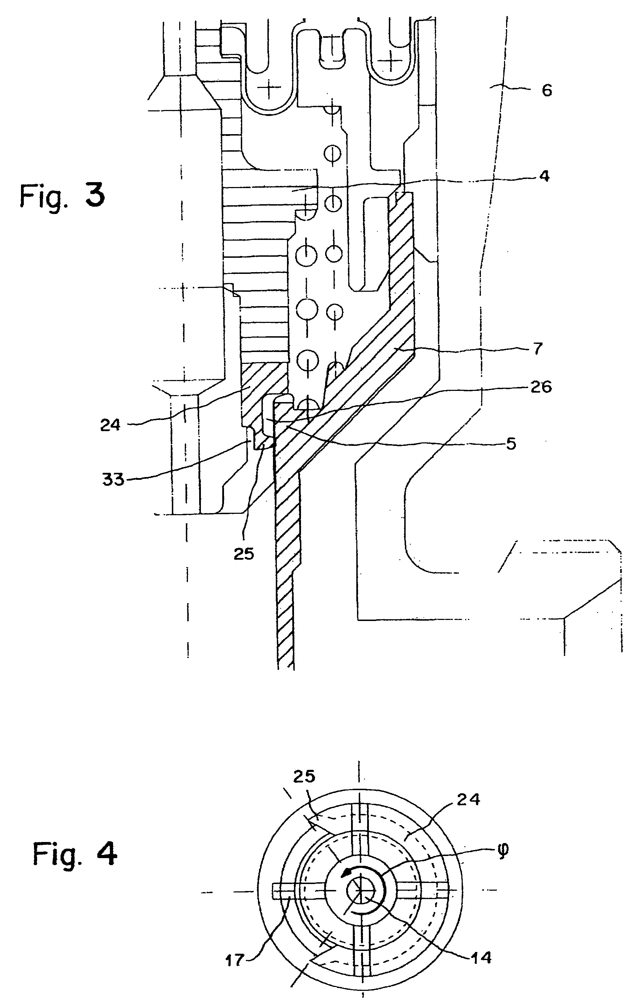

In der Fig. 3 ist die zweite Drosselstelle grösser dargestellt als in der Fig. 1 oder Fig.2, weshalb die Details der Formgebung hier besser ersichtlich sind. Die Fig. 3 zeigt nun weiter eine Ausgestaltung der ersten Drosselstelle, bei der auf den Regelkörper 4 ein Gummiteil 24 aufgesetzt ist, das mit dem ersten Ventilsitz 5 zusammenwirkt. Das Gummiteil 24 weist eine Dichtlippe 25 auf, die seitlich am ersten Ventilsitz 5 anliegt und damit die Abdichtung gewährleistet. Die Dichtlippe 25 umspannt, wie in der Fig. 4 gezeigt ist, einen beliebigen Winkel ϕ, der beispielsweise 120° oder 270° betragen kann, und begrenzt daher den Durchfluss durch die erste Drosselstelle sektoriell. Der Öffnungsquerschnitt der ersten Drosselstelle hängt ab vom Hub des Regelkörpers 4 und vom Umfang der sich bildenden Spaltöffnung. Mit der Dichtlippe 25 wird der Umfang der Spaltöffnung und damit die Durchflussmenge in Funktion des Hubes verkleinert. Vorteilhaft bei dieser Lösung ist, dass der Bereich, in dem die Durchflussmenge regelbar ist, nach unten erweitert ist und dass die Verstopfungsgefahr durch Staub- und Schmutzpartikel reduziert ist. Die Dichtlippe 25 ist schmal ausgebildet und weist an ihren beiden Enden einen Hinterschnitt auf. Damit soll bei einer allfälligen Quellung des Gummiteils 24 gewährleistet werden, dass die Drosselstelle voll funktionsfähig bleibt: Die bei einer Hubänderung des Regelkörpers 4 wirkende Kraft reicht entweder aus, dass die Dichtlippe 25 die Hubänderung problemlos mitmacht oder dass allein der Regelkörper 4 die Hubänderung vollzieht, wobei sich dann allerdings die am Ventilsitz 5 haftende Dichtlippe 25 verformt. Oberhalb der Dichtlippe 25 ist ein relativ grosser Hohlraum 26 (Fig. 3) vorgesehen, damit allfällige Ablagerungen von Schmutz oder Kalk nicht ein Festsitzen des Gummiteils 24 bewirken können.

Zur Minimierung der Reibung zwischen der Dichtlippe 25 und dem ersten Ventilsitz 5 ist bevorzugt auch hinter der Dichtlippe 25 ein weiterer Hohlraum 33 vorgesehen, der ein Nachgeben der Dichtlippe 25 in radialer Richtung ermöglicht.

Das Gummiteil 24 besteht aus wasserbeständigem Gummi. Bei einer Verschmutzung des durch das Durchfluss-Regelventil fliessenden Mediums mit Öl kann es daher vorkommen, dass das Gummiteil 24 aufquillt. Die beschriebene Konstruktion gewährleistet, dass das Durchfluss-Regelventil trotzdem zuverlässig arbeitet.

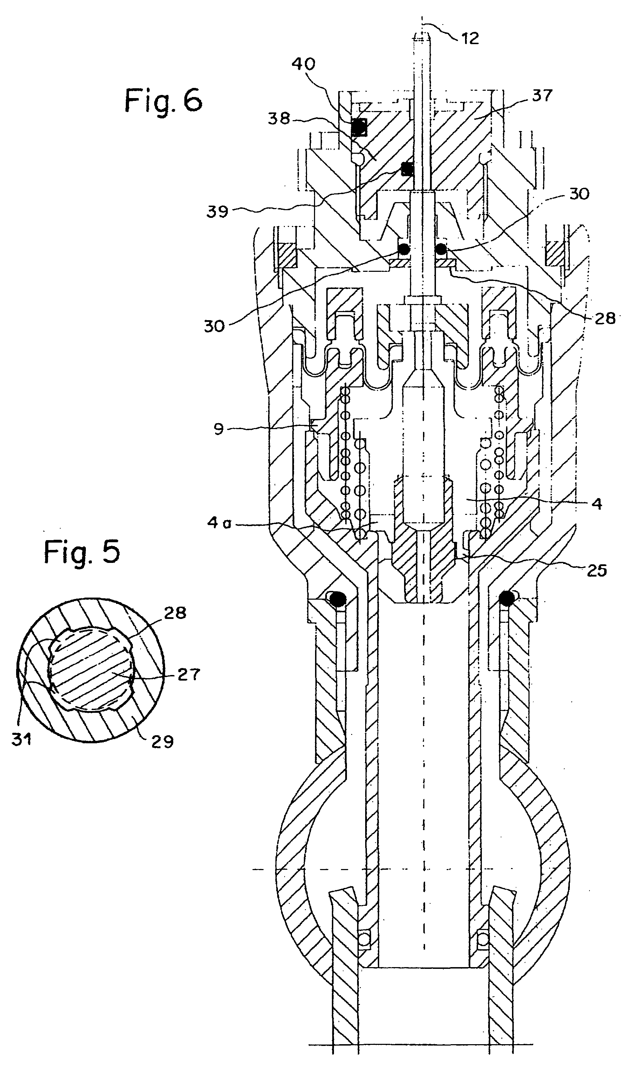

Der Regelkörper 4 ist mit einer Spindel 27 verbunden, die manuell oder von einem nicht dargestellten Antrieb betätigbar ist zur Einstellung der Öffnung 8. Die Spindel 27 ist durch eine Bohrung 28 in einem Lagerteil 29 geführt, die der Führung und der Lagerung der Spindel 27 dient. Zur Abdichtung der Druckkammer 15 gegen aussen dient ein O-Ring 30. Die Fig. 5 zeigt die Bohrung 28 im Querschnitt. Die Bohrung 28 ist nun nicht kreisrund, sondern sie weist von der kreisrunden Form radial gegen aussen gerichtete Ausnehmungen 31 auf, so dass zwischen der Spindel 27 und dem Lagerteil 29 mehrere Spalte verbleiben, durch die das Medium, in der Regel Heizungswasser, jederzeit zwischen beiden Seiten des Lagerteils 29 frei zirkulieren kann. Dadurch wird ein Auskristallisieren fester Bestandteile in der Bohrung 28 und damit ein Festsitzen der Spindel 27 verhindert. Die Bohrung 28 ist trotzdem derart gestaltet, dass die einwandfreie Führung der Spindel 27 wie bei einer kreisrunden Bohrung gewährleistet ist. Damit der Regelkörper 4 (Fig. 1) einer Bewegung der Spindel 27 in positiver y-Richtung 12 verzugslos folgen kann, ist zwischen dem Regelkörper 4 und dem Ventilgehäuse 6 in bekannter Weise eine zweite Feder eingespannt, die auf den Regelkörper 4 eine in positiver y-Richtung 12 wirkende Kraft ausübt.

Die Fig. 6 zeigt eine Ausführung des Durchfluss-Regelventils, das sich zum einfachen Einbau in ein Radiatorgestänge 32 eignet. Bei diesem Ventil erfolgt die Zuleitung und die Ableitung des Heizwassers koaxial entlang der Richtung 12, in der der Regelkörper 4 und der Druckregulierkörper 9 verschiebbar sind. Die Figur zeigt diese Abwandlung in zwei unterschiedlichen Variationen. Am Regelkörper 4 ist ein Dichtungselement 4a angebracht, welches für das zuverlässige Abdichten des Regelventils dient und welches wahlweise mit der Dichtlippe 25 zur sektoriellen Durchflussregulierung des Strömungsmediums ausgestattet sein kann. Der obere Bereich der Spindel 27 wird durch eine Stopfbuchse 37 und durch die in Fig. 5 dargestellte Bohrung 28, die die Führung und die Lagerung der Spindel 27 übernimmt, geführt. Bei Ausfall des O-Rings 30 bzw. bei Undichtigkeit kann die Stopfbuchse 37 durch eine Service-Stopfbuchse 38 ersetzt werden, die mittels zweier weiterer O-Ringe 39 und 40 die Dichtheit des Regelventils gewährleistet. Dies erübrigt den Ausbau und die Demontage des Regelventils zum Austausch des defekten O-Ringes 30.

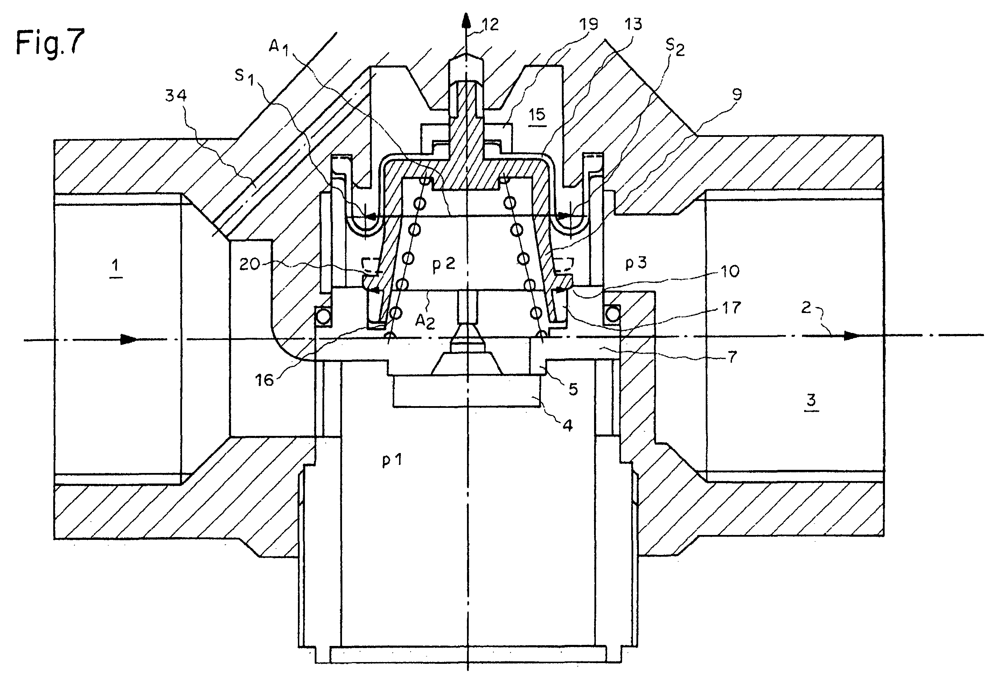

Fig. 7 zeigt eine andere Ausgestaltung des erfindungsgemässen Durchfluss-Regelventils, bei dem der Antrieb (in der Zeichnung nicht dargestellt) für den Regelkörper 4 auf der dem Druckregulierkörper 9 abgewandten Seite des Regelkörpers 4 liegt. Dadurch ergibt sich eine einfachere Ausgestaltung des Regelventils, da der Antrieb, also bsp. die Spindel 27, nicht mehr durch den Druckregulierkörper 9 und die Druckkammer 15 hindurchgeführt werden muss und sich somit die oben beschriebene Dichtungsprobleme zwischen Druckkammer 15 und dem zwischen den Drosselstellen liegenden Raum erübrigen.

Auch hier ist ein Einlassraum 1 gezeigt, durch den das in x-Richtung 2 fliessende Strömungsmedium in das Durchfluss-Regelventil eintritt und ein Auslassraum 3, durch den das Strömungsmedium das Durchfluss-Regelventil in gleicher x-Richtung 2 wieder verläßt. Zwischen dem Einlassraum 1 und dem Auslassraum 3 befinden sich ebenfalls wieder die oben beschriebenen zwei in Reihe geschalteten Drosselstellen. Die erste Drosselstelle wird gebildet von dem Regelkörper 4, der mit einem ersten Ventilsitz 5 zusammenwirkt. Die zweite Drosselstelle wird gebildet von dem Druckregulierkörper 9, der mit einem zweiten Ventilsitz 10 des Ventileinsatzes 7 zusammenwirkt. Der Druck im Einlassraum ist mit p₁, der Druck zwischen den beiden Drosselstellen mit p₂ und der Druck im Auslassraum mit p₃ bezeichnet.

Der Druckregulierkörper 9 ist über eine elastische Membrane 13 mit dem Ventilgehäuse 6 verbunden. Die Steuerung des zwischen den Drosselstellen wirkenden Druckes wird auch hier dadurch ermöglicht, dass auf die Membrane 13 einerseits der Eingangsdruck p₁ und andererseits der zwischen den Drosselstellen wirkende Druck p₂ wirkt. Um diese Wirkung zu erreichen, ist der Einlassraum 1 über eine im Ventilgehäuse angebrachte Bohrung 34 mit einer Druckkammer 15 verbunden, die auf die Membrane 13 und auf den Druckregulierkörper 9 einwirkt. Der Druck p₁ übt somit eine in negativer y-Richtung 12 wirkende Kraft F₁ auf den Druckregulierkörper 9 aus. Andererseits übt der Druck p₂ eine in positiver y-Richtung 12 wirkende Kraft F₂ auf den Druckregulierkörper 9 aus. Die wirksame Fläche A₁, an der der Druck p₁ an der Membrane 13 oder am Druckregulierkörper 9 angreift, ist gleich der wirksamen Fläche A₂ bemessen, an der der Druck p₂ an der Membrane 13 oder am Druckregulierkörper 9 angreift. Die resultierende Kraft F₁-F₂ ist daher direkt proportional zum Differenzdruck p₁-p₂. Eine zwischen dem Ventileinsatz 7 und dem Druckregulierkörper 9 eingespannte Reglerfeder 16 übt eine in positiver y-Richtung 12 auf den Druckregulierkörper 9 wirkende Kraft F_{R} aus. Der Öffnungsgrad der Öffnung 11 stellt sich so ein, dass die Kräfte F₁-F₂ und F_{R} gleich gross sind, prinzipiell also wie in Fig. 1 erläutert.

Die wirksame Fläche A₁, an der der Druck p₁ an der Membrane 13 oder am Druckregulierkörper 9 angreift, erstreckt sich in radialer Richtung im wesentlichen zwischen den beiden Scheitelpunkten S₁ und S₂.

Der rotationssymmetrische Aufbau des gesamten Durchfluss-Regelventils führt dazu, dass das Wasser die zweite Drosselstelle über den gesamten Winkelbereich von 360° durchströmt, so dass in der Folge der für die Regelung nötige Hub des Druckregulierkörpers 9 minimal wird. Eine Änderung der Lage des Druckregulierkörpers 9 infolge einer Änderung der äusseren Druckdifferenz p₁ - p₃ führt somit zu der kleinst möglichen Hubänderung und somit zu der kleinst möglichen Änderung der von der Reglerfeder 16 auf den Druckregulierkörper 9 ausgeübten Kraft F_{R} und somit zur geringst möglichen Änderung des den Durchfluss bestimmenden Wirkdruckes p₁ - p₂.

Die Führung des Druckregulierkörpers 9 in y-Richtung wird ebenfalls einerseits durch Flügel bzw. Rippen 17 gewährleistet, die mit dem Ventileinsatz 7 zusammenwirken, andererseits durch Flügel bzw. Rippen oder einfach einem zylinderförmigen Fortsatz am anderen Ende des Druckregulierkörpers 9, der in einer Ausnehmung des Ventilgehäuses 6 eingreift und dort möglichst reibungsfrei, vom Strömungsmedium umspült, gelagert wird.

Mittels eines auf den Druckregulierkörper 9 aufgesetzten Ringes 19, beispielsweise aus Messing, Kupfer oder versiegeltem Blei kann die Masse des Druckregulierkörpers 9 erhöht und damit die Resonanzfrequenz der möglichen Schwingungen erniedrigt werden. Dadurch liegt die Resonanzfrequenz tiefer als die durch die Strömung erzeugten Erregerfrequenzen.

Der Druck p₃ greift auch an der Membrane 13 an und übt eine in positiver y-Richtung 12 auf den Druckregulierkörper 9 wirkende Kraft F₃ aus. Zur Kompensation dieser Kraft F₃ weist der Druckregulierkörper 9 einen Fortsatz 20 auf, an dem der Druck p₃, ebenso wie bereits oben beschrieben, diese Kraft ausgleicht.

Diese Ausführungsform nach Fig. 7 eignet sich insbesondere für Heizungen, bei denen eine geringe Bautiefe gefordert wird. Dies ist für bsp. für Wärmetauscher vorteilhaft. Auch hier ist eine vertikale Zuführung des Strömungsmediums (wie für das erste Regelventil in Fig. 6 dargestellt), möglich, wenn der Antrieb des Regelkörpers 4 bsp. mittels eines Winkelgetriebes seitlich ausgeführt wird oder Magnetantriebe verwendet werden.

## Patentansprüche

1. Durchfluss-Regelventil zur Regelung des Durchflusses eines Strömungsmediums, mit einem Einlassraum (1), zwei nacheinander angeordneten Drosselstellen und einem Auslassraum (3), wobei die erste Drosselstelle als Verstellorgan für den Durchfluss dient und wobei die Druckdifferenz (p₁-p₂) über der ersten Drosselstelle mittels der zweiten Drosselstelle auf einen konstanten Wert regelbar ist, und
- die erste Drosselstelle gebildet ist von einem Regelkörper (4), der mit einem ersten Ventilsitz (5) zusammenwirkt,
- die zweite Drosselstelle gebildet ist von einem Druckregulierkörper (9), der mit einem zweiten Ventilsitz (10) zusammenwirkt,
- der Einlassraum (1) mit einer Druckkammer (15) verbunden ist, die zumindest teilweise auf den Druckregulierkörper (9) einwirkt;
- eine erste wirksame Fläche (A₁), die den im Einlassraum (1) herrschenden Druck (p₁) auf den Druckregulierkörper (9) überträgt, annähernd gleich einer zweiten wirksamen Fläche (A₂) ist, die den zwischen den beiden Drosselstellen herrschenden Druck (p₂) auf den Druckregulierkörper (9) überträgt, und
- der Druckregulierkörper (9) einen rotationssymmetrischen Durchfluss des Strömungsmediums ermöglicht,
**dadurch gekennzeichnet,**
- **dass** der Regelkörper (4) und der Druckregulierkörper (9) mittels einer elastischen Membrane (13) verbunden und in einer gleichen ersten Richtung (12) verschiebbar sind.

2. Durchfluss-Regelventil nach Anspruch 1,
**dadurch gekennzeichnet,**
**dass** der Druckregulierkörper (9) und das Ventilgehäuse (6) mittels einer elastischen Membrane (13) verbunden sind.

3. Durchfluss-Regelventil nach Anspruch 1 oder 2,
**dadurch gekennzeichnet,**
**dass** eine dritte wirksame Fläche (A₃), die den im Einlassraum (1) herrschenden Druck (p₁) auf den Regelkörper (4) in der ersten Richtung (12) überträgt, annähernd gleich einer vierten wirksamen Fläche (A₄) ist, die den im Einlassraum (1) herrschenden Druck (p₁) auf den Regelkörper (4) in der zur ersten Richtung (12) entgegengesetzten Richtung überträgt.

4. Durchfluss-Regelventil nach Anspruch 3,
**dadurch gekennzeichnet,**
**dass** sich die dritte wirksame Fläche (A₃) auf der dem Einlassraum (1) zugewandten Seite des Regelkörpers (4) und die vierte wirksame Fläche (A₄) auf der der Druckkammer (15) zugewandten Seite des Regelkörpers (4) befindet.

5. Durchfluss-Regelventil nach einem der vorhergehenden Ansprüche,
**dadurch gekennzeichnet,**
**dass** die Summe aus der ersten wirksamen Fläche (A₁) und vierten wirksamen Fläche (A₄) in etwa annähernd so gross ist wie die Summe aus der zweiten wirksamen Fläche (A₂) und dritten wirksamen Fläche (A₃).

6. Durchfluss-Regelventil nach einem der vorhergehenden Ansprüche,
**dadurch gekennzeichnet,**
**dass** die elastische Membran (13) zur beweglichen Lagerung des Druckregulierkörpers (9) und zur Abdichtung der Druckkammer (15) dient.

7. Durchfluss-Regelventil nach einem der vorhergehenden Ansprüche,
**dadurch gekennzeichnet,**
**dass** der Druckregulierkörper (9) derart ausgebildet ist, dass die Kraft (F₃), die durch den im Auslassraum (3) herrschenden Druck (p₃) zumindest teilweise auf den Druckregulierkörper (9) in der ersten Richtung (12) wirkt, der Kraft (F₄, F₅) entspricht, die durch den im Auslassraum (3) herrschenden Druck (p₃) zumindest teilweise auf den Druckregulierkörper (9) in einer zur ersten Richtung (12) entgegengesetzten Richtung wirkt.

8. Durchfluss-Regelventil nach einem der vorhergehenden Ansprüche,
**dadurch gekennzeichnet,**
**dass** die durch den im Auslassraum (3) herrschenden Druck (p₃), den im Einlassraum (1) und in der Druckkammer (15) herrschenden Druck (p₁) und den zwischen den Drosselstellen herrschenden Druck (p₂) und/oder die durch die Strömung des Strömungsmediums zumindest durch die zweite Drosselstelle verursachten Kräfte (F₁ - F₅) auf den Druckregulierkörper (9) und den Regelkörper (4) symmetrisch angreifen.

9. Durchfluss-Regelventil nach einem der vorhergehenden Ansprüche,
**dadurch gekennzeichnet,**
**dass** der Druckregulierkörper (9) in der Umgebung der zweiten Drosselstelle mittels annähernd zur ersten Richtung (12) parallel angeordneter Flügel (17) Strömungskammern bildet, die eine Strömung des Strömungsmediums in zur ersten Richtung (12) nicht annähernd parallelen Richtungen verhindert.

10. Durchfluss-Regelventil nach einem der vorhergehenden Ansprüche,
**dadurch gekennzeichnet,**
**dass** Mittel (19) zur Erhöhung der Masse des Druckregulierkörpers (9) vorhanden sind.

11. Durchfluss-Regelventil nach einem der vorhergehenden Ansprüche,
**dadurch gekennzeichnet,**
**dass** die zweite Drosselstelle (9, 10) gebildet ist durch eine kegelförmige Fläche, die mit einem scharfkantigen Gegenstück zusammenwirkt, damit die infolge der Strömung gemäss dem Gesetz von Bernoulli bewirkte Verkleinerung des auf den Druckregulierkörper (9) einwirkenden Druckes möglichst gering ist.

12. Durchfluss-Regelventil nach einem der vorhergehenden Ansprüche,
**dadurch gekennzeichnet,**
**dass** der Regelkörper (4) ein Gummiteil (24) aufweist, das mit dem ersten Ventilsitz (5) die erste Drosselstelle bildet, wobei das Gummiteil (24) eine Dichtlippe (25) aufweist, die den Durchfluss des Strömungsmediums durch die erste Drosselstelle sektoriell begrenzt.

13. Durchfluss-Regelventil nach Anspruch 12,
**dadurch gekennzeichnet,**
**dass** die Dichtlippe (25) derart flexibel gestaltet ist, dass Verschmutzungen oder Quellungen den Durchfluss des Strömungsmediums nicht beeinträchtigt.

14. Durchfluss-Regelventil nach einem der vorhergehenden Ansprüche,
**dadurch gekennzeichnet,**
**dass** der Regelkörper (4) eine Kammer (23) aufweist, deren Volumen wenigstens halb so gross ist wie die durch eine volle Hubänderung bewirkte Volumenänderung der Druckkammer (15).

15. Durchfluss-Regelventil nach einem der vorhergehenden Ansprüche,
**dadurch gekennzeichnet,**
**dass** der Regelkörper (4) mit einer manuell oder von einem Antrieb betätigbaren Spindel (27) verbunden ist, dass die Spindel (27) durch eine Bohrung (28) eines Lagerteils (29) geführt ist und dass die Bohrung (28) nicht kreisrund ist.

16. Durchfluss-Regelventil nach einem der vorhergehenden Ansprüche,
**dadurch gekennzeichnet,**
**dass** am oberen Ende der Spindel (27) eine Service-Stopfbuchse (38) einsetzbar ist, die die Druckkammer (15) nach aussen abdichtet.

17. Durchfluss-Regelventil nach einem der vorhergehenden Ansprüche,
**dadurch gekennzeichnet,**
**dass** der erste Ventilsitz (5) und der zweite Ventilsitz (10) durch einen mit dem Ventilgehäuse (6) fest verbundenen Ventileinsatz (7) gebildet sind.

18. Durchfluss-Regelventil nach einem der vorhergehenden Ansprüche,
**dadurch gekennzeichnet,**
**dass** das Ventilgehäuse (6) mit dem den Einlassraum (1) und Ausslassraum (3) bildende Gehäuse oder Rohr lösbar verbunden ist.

## Claims

1. Flow rate regulating valve for regulating the flow rate of a flowing medium, with an inlet chamber (1), two restricting points arranged one after the other, and an outlet chamber (3), wherein the first restricting point acts as an adjusting member for the flow rate and wherein the pressure difference (p₁ - p₂) over the first restricting point can be regulated by means of the second restricting point to a constant value, and
- The first restricting point is formed by a regulating member (4) that cooperates with a first valve seat (5),
- The second restricting point is formed by a pressure regulating member (9) that cooperates with a second valve seat (10),
- The inlet chamber (1) is connected to a pressure chamber (15) that acts at least partially upon the pressure regulating member (9);
- A first active surface (A₁) that transfers the pressure (p₁) prevailing in the inlet chamber (1) to the pressure regulating member (9) is almost equal to a second active surface (A₂) that transfers the pressure (p₂) prevailing between the two restricting points to the pressure regulating member (9), and
- The pressure regulating member (9) enables a rotationally symmetrical through-flow of the flowing medium,
**Characterised in that**
- The regulating member (4) and the pressure regulating member (9) are connected by means of an elastic membrane (13) and are displaceable in a common first direction (12).

2. Flow rate regulating valve according to claim 1, **characterised in that** the pressure regulating member (9) and the valve housing (6) are connected by means of an elastic membrane (13).

3. Flow rate regulating valve according to claim 1 or 2, **characterised in that** a third active surface (A₃) transfers the pressure (p₁) prevailing in the inlet chamber (1) to the regulating member (4) in the first direction (12) is approximately equal to a fourth active surface (A4) that transfers the pressure (p₁) prevailing in the inlet chamber to the regulating member (4) in the direction opposite to the first direction (12).

4. Flow rate regulating valve according to claim 3, **characterised in that** the third active surface (A₃) is located on the side of the regulating member (4) facing the inlet chamber (1), and the fourth active surface (A₄) on the side of the regulating member (4) facing the pressure chamber (15).

5. Flow rate regulating valve according to one of the preceding claims, **characterised in that** the sum of the first active surface (A₁) and fourth active surface (A₄) is approximately the same size as the sum of the second active surface (A₂) and third active surface (A₃).

6. Flow rate regulating valve according to one of the preceding claims, **characterised in that** the elastic membrane (13) serves for the moveable mounting of the pressure regulating member (9) and for sealing the pressure chamber (15).

7. Flow rate regulating valve according to one of the preceding claims, **characterised in that** the pressure regulating member (9) is configured such that the force (F₃) that acts by means of the pressure (p₃) prevailing in the outlet chamber (3) at least partially upon the pressure regulating member (9) in the first direction (12) corresponds to the force (F₄, F₅) that acts by means of the pressure (p3) prevailing in the outlet chamber (3) at least partially upon the pressure regulating member (9) in a direction opposite to the first direction (12).

8. Flow rate regulating valve according to one of the preceding claims, **characterised in that** the pressure (p₃) prevailing in the outlet chamber (3) the pressure (p₁) prevailing in the inlet chamber (1) and in the pressure chamber (15) and the pressure (p₂) prevailing between the restricting points and/or the forces (F₁ - F₃) caused by the flow of the flowing medium at least through the second restricting point act symmetrically upon the pressure regulating member (9) and the regulating member (4).

9. Flow rate regulating valve according to one of the preceding claims, **characterised in that** the pressure regulating member (9) forms flow chambers in the area between the second restricting point by means of fins (17) arranged approximately parallel to the first direction (12), which prevent flow of the flowing medium in a direction (12) that is not approximately parallel to the first direction.

10. Flow rate regulating valve according to one of the preceding claims, **characterised in that** there are means (19) for increasing the mass of the pressure regulating member (9).

11. Flow rate regulating valve according to one of the preceding claims, **characterised in that** the second restricting point (9, 10) is formed by a conical surface that cooperates with a sharp-edged complementary piece so that the reduction in pressure acting upon the pressure regulating member (9) caused as a result of the flow, according to Bernouli's law, is as slight as possible.

12. Flow rate regulating valve according to one of the preceding claims, **characterised in that** the regulating member (4) is provided with a rubber portion (24) that together with the first valve seat (5) forms the first restricting point, wherein the rubber portion (24) is provided with a sealing lip (25) that sector-side limits the flow rate of the flowing medium through the first restricting point.

13. Flow rate regulating valve according to claim 12, **characterised in that** the sealing lip (25) is designed in a flexible manner such that soiling or swelling does not affect the flow rate of the flowing medium.

14. Flow rate regulating valve according to one of the preceding claims, **characterised in that** the regulating member (4) is provided with a chamber (23) the volume of which is at least half as great as the change in volume, caused by a complete change in travel, of the pressure chamber (15).

15. Flow rate regulating valve according to one of the preceding claims, **characterised in that** the regulating member (4) is connected to a spindle (27) that can be actuated manually or by an actuator, **in that** the spindle (27) is guided through a bore (28) in a mounting portion (29), and **in that** the bore (28) is not circular.

16. Flow rate regulating valve according to one of the preceding claims, **characterised in that** a service gland (38) can be fitted to the upper end of the spindle (27), which seals off the pressure chamber (15) from the outside.

17. Flow rate regulating valve according to one of the preceding claims, **characterised in that** the first valve seat (5) and the second valve seat (10) are formed by a valve insert (7) solidly fixed to the valve housing (6).

18. Flow rate regulating valve according to one of the preceding claims, **characterised in that** the valve housing (6) is releasably connected to housing or pipe forming the inlet chamber (1) and outlet chamber (3).

## Revendications

1. Soupape de réglage de débit pour la régulation du débit d'un fluide en écoulement, avec une chambre d'admission (1), deux passages calibrés disposés l'un après l'autre et une chambre d'échappement (3), le premier passage calibré servant d'organe de réglage du débit et la différence de pression (p1-p2) à travers le premier passage calibré étant réglable à une valeur constante à l'aide du deuxième passage calibré, et
- le premier passage calibré étant formé par un corps de réglage (4), qui coopère avec un premier siège de soupape (5),
- le deuxième passage calibré étant formé par un corps de régulation de pression (9), qui coopère avec un deuxième siège de soupape (10),
- la chambre d'admission (1) étant raccordée à une chambre de pression (15), qui agit au moins partiellement sur le corps de régulation de pression;
- une première surface active (A₁), qui transmet la pression (p1) régnant dans la chambre d'admission (1) au corps de régulation de pression (9), étant presque identique à une deuxième surface active (A₂), qui transmet la pression (p2) régnant entre les deux passages calibrés au corps de régulation de pression (9), et
- le corps de régulation de pression (9) permettant un passage en symétrie de rotation du fluide en écoulement,
**caractérisée en ce que**
- le corps de réglage (4) et le corps de régulation de pression (9) sont raccordés à l'aide d'une membrane élastique (13) et sont déplaçables dans une première direction identique (12).

2. Soupape de réglage de débit selon la revendication 1,
**caractérisée en ce que**
le corps de régulation de pression (9) et le carter de soupape (6) sont raccordés à l'aide d'une membrane élastique (13).

3. Soupape de réglage de débit selon la revendication 1 ou 2,
**caractérisée en ce que**
une troisième surface active (A₃), qui transmet la pression (p1) régnant dans la chambre d'admission (1) au corps de réglage (4) dans la première direction, est presque identique à une quatrième surface active (A₄), qui transmet la pression (p1) régnant dans la chambre d'admission (1) au corps de réglage (4) dans la direction opposée à la première direction (12),

4. Soupape de réglage de débit selon la revendication 3,
**caractérisée en ce que**
la troisième surface active (A₃) se trouve du côté du corps de réglage (4) orienté vers la chambre d'admission (1) et la quatrième surface active (A₄) se trouve du côté du corps de réglage (4) orienté vers la chambre de pression (15).

5. Soupape de réglage de débit selon l'une des revendications précédentes,
**caractérisée en ce que**
la somme de la première surface active (A₁) et de la quatrième surface active (A₄) est à peu près aussi grande que la somme de la deuxième surface active (A₂) et de la troisième surface active (A₃).

6. Soupape de réglage de débit selon l'une des revendications précédentes,
**caractérisée en ce que**
la membrane élastique (13) sert pour le support mobile du corps de régulation de pression (9) et pour l'étanchéité de la chambre de pression (15).

7. Soupape de réglage de débit selon l'une des revendications précédentes,
**caractérisée en ce que**
le corps de régulation de pression (9) est conçu de telle manière que la force (F3), qui est exercée au moins partiellement sur le corps de régulation de pression (9) dans la première direction (12) par la pression (p3) régnant dans la chambre d'échappement (3), correspond à la force (F4, F5), qui est exercée au moins partiellement sur le corps de régulation de pression (9) dans une direction opposée à la première direction (12) par la pression (p3) régnant dans la chambre d'échappement (3).

8. Soupape de réglage de débit selon l'une des revendications précédentes,
**caractérisée en ce que**
les forces (F₁ - F₅) produites par la pression (p3) régnant dans la chambre d'échappement (3), par la pression (p1) régnant dans la chambre d'admission (1) et dans la chambre de pression (15) et par la pression (p2) régnant entre les passages calibrés et/ou par l'écoulement du fluide en écoulement au moins à travers le deuxième passage calibré s'exercent symétriquement sur le corps de régulation de pression (9) et sur le corps de réglage (4).

9. Soupape de réglage de débit selon l'une des revendications précédentes,
**caractérisée en ce que**
le corps de régulation de pression (9) forme, dans le voisinage du deuxième passage calibré, des chambres d'écoulement, qui empêchent un écoulement du fluide d'écoulement dans des directions qui ne sont pas à peu près parallèles à la première direction (12), à l'aide d'ailettes (17) disposées à peu près parallèlement à la première direction (12).

10. Soupape de réglage de débit selon l'une des revendications précédentes,
**caractérisée en ce que**
des moyens (19) sont prévus pour augmenter la masse du corps de régulation de pression (9).

11. Soupape de réglage de débit selon l'une des revendications précédentes,
**caractérisée en ce que**
le deuxième passage calibré (9, 10) est formé par une surface conique qui coopère avec un pendant à arêtes vives afin que la diminution de la pression s'exerçant sur le corps de régulation de pression (9), provoquée par l'écoulement selon la loi de Bernouilli, soit la plus réduite possible.

12. Soupape de réglage de débit selon l'une des revendications précédentes,
**caractérisée en ce que**
le corps de réglage (4) comporte une partie en caoutchouc (24) qui forme le premier passage calibré avec le premier siège de soupape (5), la partie en caoutchouc (24) comportant une lèvre d'étanchéité (25) qui limite de manière sectorielle le passage du fluide en écoulement à travers le premier passage calibré.

13. Soupape de réglage de débit selon l'une des revendications précédentes,
**caractérisée en ce que**
la lèvre d'étanchéité (25) a une souplesse de configuration telle que des salissures ou des gonflements ne nuisent pas au passage du fluide d'écoulement.

14. Soupape de réglage de débit selon l'une des revendications précédentes,
**caractérisée en ce que**
le corps de réglage (4) comporte une chambre (23) dont le volume est au moins à moitié aussi important que la variation de volume de la chambre de pression (15) provoquée par une modification complète de course.

15. Soupape de réglage de débit selon l'une des revendications précédentes,
**caractérisée en ce que**
le corps de réglage (4) est raccordé à une broche (27) actionnable manuellement ou à l'aide d'un mécanisme d'entraînement, **en ce que** la broche (27) est guidée à travers un alésage (28) d'une partie de coussinet (29) et **en ce que** l'alésage (28) n'est pas orbiculaire.

16. Soupape de réglage de débit selon l'une des revendications précédentes,
**caractérisée en ce que**
un presse-étoupe de maintenance, qui étanchéifie la chambre de pression (15) vers l'extérieur, peut être inséré à l'extrémité supérieure de la broche (27).

17. Soupape de réglage de débit selon l'une des revendications précédentes,
**caractérisée en ce que**
le premier siège de soupape (5) et le deuxième siège de soupape (10) sont formés par une garniture de soupape (7) raccordée rigidement au carter de soupape (6).

18. Soupape de réglage de débit selon l'une des revendications précédentes,
**caractérisée en ce que**
le carter de soupape (6) est raccordé de manière détachable avec le carter ou le tube formant la chambre d'admission (1) et la chambre d'échappement (3).
